# EUROPEAN PATENT SPECIFICATION

(11) **EP 2 682 967 B1**
(45) Date of publication and mention of the grant of the patent: **06.11.2019**
(21) Application number: 12751790.2
(22) Date of filing: 07.02.2012
(51) Int. Cl.: H01G 9/10

(54) **ELECTROLYTIC CAPACITOR**
ELEKTROLYTKONDENSATOR
CONDENSATEUR ÉLECTROLYTIQUE

(30) Priority: 01.03.2011 JP 2011044440
(43) Date of publication of application: 08.01.2014
(73) Proprietor: NIPPON CHEMI-CON CORPORATION, Tokyo 141-8605 (JP); The Yokohama Rubber Co., Ltd., Minato-ku Tokyo 105-8685 (JP)
(72) Inventor: ASHINO, Hirotugu, Tokyo 141-8605 (JP); SAIKI, Takeaki, Hiratuka-shi Kanagawa 254-0047 (JP)
(74) Representative: Eisenführ Speiser
(86) International application number: PCT/JP2012/052790
(87) International publication number: WO 2012/117820

(56) References cited:
- WO-A1-2008/038808
- JP-A- 1 270 214
- JP-A- 6 053 092
- JP-A- 7 201 679
- JP-A- 2003 031 448
- JP-A- 2005 142 416
- JP-A- 2008 251 980
- US-A1- 2009 325 058

## Description

### TECHNICAL FIELD

The present invention relates to an electrolytic capacitor having a lead wire which is formed by plating a metal composed of mainly tin on an aluminum wire.

### BACKGROUND ART

An electrolytic capacitor comprises a capacitor element, a electrolytic solution for driving the capacitor or a solid electrolyte, and an outer casing. This capacitor element is formed by winding an anode foil containing a valve action metal such as tantalum and aluminum together with a cathode foil. The electrolytic solution for driving the capacitor or the solid electrolyte is retained in the capacitor element. The outer casing houses the capacitor element and the driving electrolytic solution or the solid electrolyte. The anode foil of such an electrolytic capacitor is connected to an anode electrode via a lead terminal. On the other hand, the cathode foil is connected to a cathode electrode via a lead terminal. These lead terminals are connected to the anode or cathode foil by means of e.g. stitching and ultrasonic welding.

The lead terminal has three parts, which are, an aluminum wire which connects to the anode or cathode foil, a connection part formed at the end of the aluminum wire, and a lead wire which is joined to the connection part. A lead plating layer is formed on the lead wire. The end of this lead wire is joined to the connection part formed at the end of the aluminum wire by means of arc welding. However, lead used in the lead wire is a substance that is not only harmful to the human body but has a bad influence on the natural environment. Accordingly, in recent years, development of electronic parts that do not use any lead has been promoted in regards to environmental protection.

A capacitor that does not use any lead, as shown in Patent Document 1, uses a copper-coated steel wire applied with tin plating consisting of 100% tin as the lead wire. This tin plating is joined by inserting and arc welding the copper-coated steel wire into a recessed portion provided at one end of the round bar portion of the lead wire. In this aluminum electrolytic capacitor, a fusion layer of copper, tin, and aluminum produced by heating copper, tin plating, and aluminum is formed at the connecting part between the lead wire and the round bar portion.

However, in Patent Document 1, whiskers may develop from the fusion layer produced at the connection part between the round bar portion of the lead terminal and the tin-plated lead wire. These whiskers are fibrous crystals of tin, and may reach a length of 1 mm or more against a diameter of 1 µm. Due to the development of these whiskers, in the worst case scenario there is a risk of short circuiting between a pair of lead terminals. There is also a risk of the whisker falling onto a substrate and causing a short circuit between other electronic parts and between substrate patterns.

Various technologies have been conventionally proposed for suppressing the development or growth of these whiskers. In Patent Document 2, the lead wire of the capacitor is washed with an alkaline washing fluid. After removing this washing fluid, it is applied to heat treatment to prevent the development of whiskers. In Patent Document 3, the welding point of connecting the CP wire to the aluminum round bar by welding is provided with a waterproof film, and whisker growth is suppressed by this waterproof film. In Patent Document 4, vacuum state is made and filled with an inert gas, and high temperature heat treatment is applied. By doing so, internal applied force of the welding point of the capacitor lead wire is relaxed, and whisker development at the welding portion is prevented.

### BACKGROUND ART

Patent Document 1: JP2000-124073 A
Patent Document 2: JP2007-67146 A
Patent Document 3: JP2007-335714 A
Patent Document 4: JP2008-130782 A

### SUMMARY OF THE INVENTION

### PROBLEMS TO BE SOLVED BY THE INVENTION

However, in Patent Documents 2 and 4, the development of whiskers could not be completely prevented, and therefore effects were insufficient. In addition, in Patent Document 3, there was a possibility that the growing whisker breaks through the resin and the whisker will appear outside the resin, and therefore the effect was insufficient.

The present invention was provided to solve the problems described above. The object of the present invention is to provide an aluminum electrolytic capacitor employing a lead terminal that does not use lead, wherein the development and growth of a whisker in the lead terminal is suppressed.

### MEANS FOR SOLVING THE PROBLEMS

The present inventors, in order to solve the above problems, have selected a material for coating the lead terminal, thereby resulting in completion of the present invention.

In other words, the electrolytic capacitor of the present invention is an electrolytic capacitor comprising a lead terminal including an aluminum wire that connects to an anode or cathode foil, a connection part formed at the end of the aluminum wire, and a lead wire connected to the connection part. A liquid curing resin containing a flaky filler is applied to or filled in the surface of the connection part of said lead terminal to form a cured resin layer.

The capacitor of the present invention may also comprise the following embodiments.
(1) The average aspect ratio of the flaky filler is 70 or higher.
(2) The liquid curing resin contains the flaky filler at 1 wt% or more and 50 wt% or less.
(3) The liquid curing resin is an addition curing silicone, a condensation curing silicone, an addition curing modified silicone, or a condensation curing modified silicone.
(4) The flaky filler is a natural mica such as bronze mica, white mica, and sericite, a synthetic mica such as fluorine bronze mica, potassium tetrasilicone mica, sodium tetrasilicone mica, sodium taeniolite, and lithium taeniolite, a natural smectite such as montmorillonite, and a synthetic smectite such as sodium hectorite, lithium hectorite, and saponite.
(5) The flaky filler is rendered hydrophobic by treatment.

### EFFECTS OF THE INVENTION

According to the present invention as above, it becomes possible to suppress whisker development by applying or filling a resin to or in the connection part of the lead wire. Further, even if a whisker develops and grows within the resin, the whisker can be suppressed by the flaky filler in the liquid curing resin from growing towards the resin surface and appearing therefrom.

### BRIEF DESCRIPTION OF THE DRAWINGS

Figure 1 is a cross-sectional view and a magnified view thereof showing an electrolytic capacitor in the Example of the present invention.
Figure 2 is a cross-sectional view and a magnified view thereof showing a modified example of an electrolytic capacitor in the Example of the present invention.

### DESCRIPTION OF EMBODIMENTS

Examples of the electrolytic capacitor according to the present invention will now be described referring to drawings. Matters common to the contents that have been already described in Background Art or Problems are omitted as appropriate.

### [1-1. Configuration of the Electrolytic Capacitor]

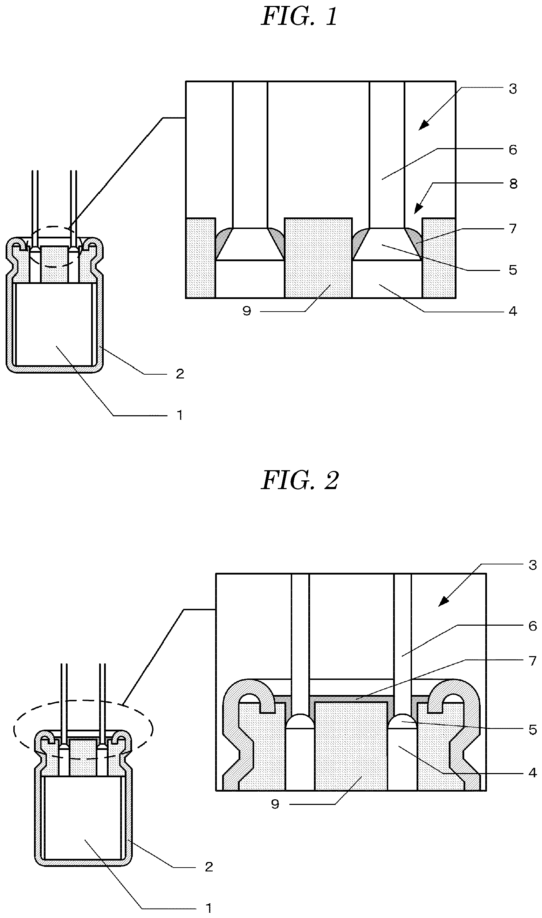

Figure 1 shows the cross-sectional view of the electrolytic capacitor in the present embodiment. Symbol 1 in Figure 1 shows a capacitor element of an anode foil and a cathode foil that are wound together with a separator therebetween. Capacitor element 1 is configured to be housed in an outer casing 2 together with a driving electrolyte or a solid electrolyte. The anode and cathode foils of the capacitor element 1 are provided with electrodes (not shown) . The electrodes of these anode and cathode foils are connected with lead terminals 3 for connecting with the outside.

The lead terminal 3 is configured from three parts, that are an aluminum wire 4, a connection part 5, and a lead wire 6. This aluminum wire 4 is connected to the anode or cathode foil. The connection part 5 is integrally formed at the end of this aluminum wire 4. The lead wire 6 plated with a metal composed of mainly tin formed thereon is connected to the connection part 5. Various methods can be utilized as the method to connect the connection part 5 and the lead wire 6. For example, they may be connected by inserting and arc welding the lead wire 6 into a recessed portion formed in the connection part 5.

The surface of the connection part 5 is coated by a resin layer 7. This resin layer 7 is provided by applying and curing a liquid curing resin containing 1 wt% or more of a flaky filler. As shown in Figure 1, the lead terminal 3 having the coated connection part 5 is inserted into a through-hole 8 of seal 9. A liquid curing resin is filled and cured in the gap between the lead wire 6 and the through-hole 8 to form the resin layer 7.

This resin layer 7 is the liquid curing resin filled in the gap between the through-hole 8 and the lead wire 6. Accordingly, as shown in Figure 2, the liquid curing resin may be filled not only in the through-hole 8 into which the lead wire 6 is inserted, but also overflowing on all surface of a seal 9 on the lead-out side of the lead wire 6. Further, the seal 9 may be provided with a belt-like recessed portion so that the through-holes 8 are linked to each other, and the liquid curing resin poured therein. In other words, a portion or all of the surface of the seal 9 comprising through-holes 8 may be filled.

### [1-2. Types of Liquid Curing Resin]

The liquid curing resin of the present invention is not particularly limited, examples of which include a silicone resin, a modified silicone resin, a hybrid silicone resin, an epoxy resin, a phenol resin, a melamine resin, a urea resin, a fluorine resin, a urethane resin, a urethane acrylic resin, an acrylic resin, a polyester resin, and a polyimide resin. Particularly among silicone resins, an addition curing silicone, a condensation curing silicone, an addition curing modified silicone, or a condensation curing modified silicone, as well as a hybrid silicone resin are preferred in regards to heat resistance and weather resistance.

The liquid curing resin may contain any other components according to the necessity in a range that does not compromise the object of the present invention. The any component includes e.g. the following (1) to (6).
(1) An inorganic filler such as dry silica, wet silica, calcinated silica, crystalline silica, titanium oxide, alumina, calcium carbonate, and carbon black.
(2) A filler that is prepared by treating a filler of (1) by an organosilicone compound such as an organohalosilane, an organoalkoxysilane, and an organosilazane.
(3) An organic resin micropowder such as a silicone resin, an epoxy resin, and a fluorine resin.
(4) A conductive metal powder such as silver and copper.
(5) A diluent such as toluene and xylene.
(6) Others such as dyes and pigments.

Moreover, the liquid curing resin may be treated so that the range of area that the liquid curing resin was applied or filled can be distinguished. It can, for example, be treated to contain a dyestuff in order to improve visibility. Alternatively, an element different from the element that configures the lead terminal can be mixed therein. The liquid curing resin can be applied or filled by confirmation of this element. By doing so, verification of whether the liquid curing resin is appropriately applied or filled will be facilitated in the manufacturing step.

### [1-3. Types of Flaky Filler]

The flaky filler of the present invention is a material for suppressing whisker growth. Examples of a flaky filler include but are not particularly limited to a natural mica such as bronze mica, white mica, and sericite, a synthetic mica such as fluorine bronze mica, potassium tetrasilicone mica, sodium tetrasilicone mica, sodium taeniolite, and lithium taeniolite, a natural smectite such as montmorillonite, a synthetic smectite such as sodium hectorite, lithium hectorite, and saponite, bentonite, talc, expanded graphite, aluminum silicate, magnesium silicate, boehmite, clay, diatomite, carbon black, silica, barium sulfate, calcium carbonate, magnesium carbonate, metal oxide, graphite, and aluminum hydroxide. In particular, natural micas such as inexpensive white mica and synthetic micas are preferred because of their ease in aspect ratio adjustment. These flaky fillers have a large planar portion relative to the weight added. Accordingly, just a small amount of the flaky filler added to the resin will increase the probability of planar portion collision during whisker growth, and whisker growth can be suppressed. In contrast, with a filler that does not have a large planar portion or with a spherical or a needle-like filler, whisker growth cannot be effectively suppressed because the filler is thrown aside even when whiskers collide, or the whiskers avoid the filler when growing.

As a shape of the flaky filler, it is desirable to have the average aspect ratio of 70 or higher. When the average aspect ratio is 70 or higher, whisker growth suppression effect is high and appearance of a whisker from the resin surface can be effectively prevented. Moreover, the average particle size is not particularly limited but is preferably 1000 µm or less, more preferably 200 µm or less. When the average particle size of the flaky filler is greater than 1000 µm, applicability and mouldability of the liquid curing resin is significantly reduced.

Further, the flaky filler is added in the range of 1 wt% or more and 50 wt% and less of the liquid curing resin. Effect cannot be sufficiently exerted when the amount of the filler added is less than 1 wt%, and application of the resin becomes difficult or mouldability becomes significantly reduced if it is greater than 50 wt%.

These flaky fillers may be applied to the hydrophobic treatment with a surface treatment agent such as a silane coupling agent, a quaternary ammonium salt, and a polyether. By applying hydrophobic treatment, the surface energy of the filler is reduced and allows easier mixing with the liquid curing resin, thereby having the effect to decrease the viscosity of the resin composition.

Further, any form can be used for the flaky filler such as a powder, a dispersed solution type, and granules, as long as it is possible to be dispersed into the liquid curing resin. Because any form can be used as the flaky filler, various types of flaky fillers can be added.

### [2. Effects]

The liquid curing resin of the resin layer 7 of the present embodiment having the above configuration has a flaky filler added thereto. Accordingly, even when a whisker develops in the connection part 5 and grows towards the resin layer 7 side, the tip will contact the flaky filler inside the resin layer 7 and thus any further whisker growth can be prevented.

### EXAMPLES

The present invention will now be further described in detail based on Examples and Comparative Examples configured below.

### [1. Examples 1-4]

### (Example 1)

Example 1 of the present invention uses an addition curing silicone as the liquid curing resin. This addition curing silicone is prepared by uniformly mixing components (1) to (5) below.
(1) 100 parts by weight of dimethylpolysiloxane wherein both molecular chain terminals are blocked by dimethylvinylsiloxy groups (content of vinyl group = 0.38% by weight) having a viscosity of 600 mPa·s.
(2) 11.4 parts by weight of fumed silica which is applied hydrophobic treatment on the surface by hexamethyldisilazane and having a specific surface area of 200 m²/g, and 5.71 parts by weight of acryloxypropyltrimethoxysilane.
(3) 2.59 parts by weight of methyl hydrogen siloxane wherein both terminals are blocked by trimethylsiloxy (content of silicon atom-bound hydrogen atom = 0.72% by weight) having a viscosity of 1.9 mPa·s (the molar ratio of the silicon atom-bound hydrogen atom to the alkenyl group of the above organopolysiloxane and acryloxypropyltrimethoxysilane is 1.00).
(4) 2.29 parts by weight of a complex of platinum and divinyltetramethyldisiloxane having a platinum concentration of 0.5% by weight.
(5) 36.6 parts by weight of white mica B-82 from YAMAGUCHIMICA CO., LTD. (average particle size 180 µm, aspect ratio distribution 5-388, and average aspect ratio 100).

The addition curing silicone prepared as above was applied to the connection part 5 of the lead terminal 3 to form the resin layer 7. Then, this lead terminal 3 was employed to fabricate ten electrolytic capacitors.

### (Example 2)

Example 2 of the present invention, similarly to Example 1, uses an addition curing silicone as the liquid curing resin. The addition curing silicone of Example 2 is prepared by uniformly mixing components (1) to (4) of Example 1 and component 5 below.

(5) 36.6 parts by weight of white mica YM-21S from YAMAGUCHIMICA CO.,LTD. (average particle size 23 µm, aspect ratio distribution 6-454, and average aspect ratio 70).

The addition curing silicone prepared as above was applied to the connection part 5 of the lead terminal 3 to form the resin layer 7. Then, this lead terminal 3 was employed to fabricate ten electrolytic capacitors.

### (Example 3)

Example 3 of the present invention uses an addition curing polyisobutylene-silicone hybrid composition as the liquid curing resin. This addition curing polyisobutylene-silicone hybrid composition is prepared by uniformly mixing components (1) to (4) below.
(1) 100 parts of polyisobutylene having vinyl groups on both terminals (from Kaneka Corporation, Epion EP200A, and viscosity: 50,000 mPa·s).
(2) 20 parts by weight of a hydrosilyl cross-linking agent (from Kaneka Corporation, CR-300) and 2.0 parts by weight of acryloxypropyltrimethoxysilane.
(3) 2.0 parts by weight of a complex of platinum and divinyltetramethyldisiloxane having a platinum concentration of 0.5% by weight.
(4) 37.2 parts by weight of white mica B-82 from YAMAGUCHIMICA CO.,LTD. (average particle size 180 µm, aspect ratio distribution 5-388, and average aspect ratio 100).

The addition curing polyisobutylene-silicone hybrid composition prepared as above was applied to the connection part 5 of the lead terminal 3 to form the resin layer 7. Then, this lead terminal 3 was employed to fabricate ten electrolytic capacitors.

### (Example 4)

Example 4 of the present invention, similarly to Example 3, uses an addition curing polyisobutylene-silicone hybrid composition as the liquid curing resin. The addition curing polyisobutylene-silicone hybrid composition of Example 4 is prepared by uniformly mixing components (1) to (3) of Example 3 and component 4 below.

(4) 37.2 parts by weight of white mica YM-21S from YAMAGUCHIMICA CO.,LTD. (average particle size 23 µm, aspect ratio distribution 6-454, and average aspect ratio 70),

The addition curing polyisobutylene-silicone hybrid composition prepared as above was applied to the connection part 5 of the lead terminal 3 to form the resin layer 7. Then, this lead terminal 3 was employed to fabricate ten electrolytic capacitors.

### [2. Comparative Examples 1-3]

### (Comparative Example 1)

Comparative Example 1 uses an addition curing silicone as the liquid curing resin. This addition curing silicone was fabricated similarly to Examples 1 and 2 except that component 5 of Examples 1 and 2 was not added. In other words, components (1) to (4) of Examples 1 and 2 were uniformly mixed to prepare the addition curing silicone. This addition curing silicone was applied to the connection part 5 of the lead terminal 3 to form the resin layer 7. Then, this lead terminal 3 was employed to fabricate ten electrolytic capacitors.

### (Comparative Example 2)

Comparative Example 2 uses an addition curing polyisobutylene-silicone hybrid composition as the liquid curing resin. This addition curing polyisobutylene-silicone hybrid composition was fabricated similarly to Examples 3 and 4 except that (4) of Examples 3 and 4 was not added. In other words, components (1) to (3) of Examples 3 and 4 were uniformly mixed to prepare the addition curing polyisobutylene-silicone hybrid composition. This addition curing polyisobutylene-silicone hybrid composition was applied to the connection part 5 of the lead terminal 3 to form the resin layer 7. Then, this lead terminal 3 was employed to fabricate ten electrolytic capacitors.

### (Comparative Example 3)

In Comparative Example 3, ten electrolytic capacitors were fabricated without applying the liquid curing resin to the lead terminal 3. In other words, it is a Comparative Example where the resin layer 7 composed of coating the liquid curing resin was not formed.

### [3. Comparison Results]

Table 1 represents the number of capacitors out of 10 where a whisker appeared on the resin surface after 4000 and 5000 hours for each of the capacitors from Examples 1-4 and Comparative Examples 1 and 2 configured by the above methods. For Comparative Example 3, the number of capacitors with whisker development at the connection part is shown.

Table 1 also shows the surface state after 5000 hours. "o" in the Table is a state where no whisker is seen near the resin surface. "x" in the Table is a state where no whisker appeared outside the resin, but a whisker is present near the resin surface, or a state where a whisker is present at the connection part.

**[Table 1]**

| | Average Aspect Ratio | After 4000h | After 5000h | Surface State After 5000h |
|---|---|---|---|---|
| Example 1 | 100 | 0/10 | 0/10 | ○ |
| Example 2 | 70 | 0/10 | 0/10 | ○ |
| Example 3 | 100 | 0/10 | 0/10 | ○ |
| Example 4 | 70 | 0/10 | 0/10 | ○ |
| Comparative Example 1 | None | 1/10 | 2/10 | × |
| Comparative Example 2 | None | 1/10 | 2/10 | × |
| Comparative Example 3 | None | 7/10 | 8/10 | × |

In the lead terminals of Examples 1-4 where a resin supplemented with a flaky filler is applied, it is seen that no whisker appears from the resin surface not only after 4000 hours but still after 5000 hours. Further, as shown with "o" and "x" in the Table, Examples 1-4 are a state where no whisker is seen near the resin surface.

On the other hand, a resin without addition of a flaky filler is applied in Comparative Examples 1 and 2, and it is seen that a whisker appears from the resin surface of one lead terminal when 4000 hours have passed. Subsequently, when 5000 hours have passed, the number of capacitors where a whisker appeared from the resin surface becomes two.

In addition, although not shown in the Table, in the lead terminal of Comparative Example 3 where no resin is applied to the connection part 5, a whisker develops at the connection part surface when 5000 hours have passed. Subsequently, it is seen that a whisker develops at the connection part in 7 out of 10 capacitors after 4000 hours. Subsequently, when 5000 hours have passed, the number of capacitors where a whisker appeared from the resin surface becomes eight.

As shown above, by comparing Comparative Examples 1 and 2 having a resin layer with Comparative Example 3 without a resin layer, it is seen that it becomes possible to suppress whisker development by applying a resin to the connection part.

Further, as seen from comparing Examples 1-4 with Comparative Examples 1 and 2, by applying a liquid curing resin containing a flaky filler and forming a resin layer, even if a whisker develops in the resin and grows, the whisker does not appear from the resin surface due to the flaky filler.

### DESCRIPTION OF SYMBOLS

- 1: Capacitor element
- 2: Outer casing
- 3: Lead terminal
- 4: Aluminum wire
- 5: Connection part
- 6: Lead wire
- 7: Resin layer
- 8: Through-hole
- 9: Seal

## Claims

1. An electrolytic capacitor comprising a lead terminal (3) including: an aluminum wire (4) that connects to an anode or cathode foil, a connection part (5) formed at the end of the aluminum wire (4), and a lead wire (6) that connects to the connection part (5),
wherein a liquid curing resin containing a flaky filler at 1 wt% or more and 50 wt% or less is applied to or filled in the surface of the connection part (5) of the lead terminal (3) to form a cured resin layer (7).

2. The electrolytic capacitor according to claim 1, wherein the average aspect ratio of the flaky filler is 70 or higher.

3. The electrolytic capacitor according to claim 1, wherein the liquid curing resin is an addition curing silicone, a condensation curing silicone, an addition curing modified silicone, or a condensation curing modified silicone.

4. The electrolytic capacitor according to claim 1, wherein the flaky filler is a natural mica such as bronze mica, white mica, and sericite, a synthetic mica such as fluorine bronze mica, potassium tetrasilicone mica, sodium tetrasilicone mica, sodium taeniolite, and lithium taeniolite, a natural smectite such as montmorillonite, and a synthetic smectite such as sodium hectorite, lithium hectorite, and saponite.

5. The electrolytic capacitor according to claim 1, wherein the flaky filler is rendered hydrophobic by treatment.

## Patentansprüche

1. Elektrolytkondensator, umfassend einen Leitungsanschluss (3), der Folgendes beinhaltet: einen Aluminiumdraht (4), der mit einer Anoden- oder Kathodenfolie verbunden ist, ein Verbindungsteil (5), das an dem Ende des Aluminiumdrahts (4) ausgebildet ist und einen Leitungsdraht (6), der mit dem Verbindungsteil (5) verbunden ist,
wobei ein flüssiges aushärtendes Harz, das einen flockigen Füllstoff zu 1 Gew.-% oder mehr und 50 Gew.-% oder weniger enthält, auf die Oberfläche des Verbindungsteils (5) des Leitungsanschlusses (3) aufgebracht oder in diese gefüllt wird, um eine ausgehärtete Harzschicht (7) zu bilden.

2. Elektrolytkondensator nach Anspruch 1, wobei das durchschnittliche Querschnittsverhältnis des flockigen Füllstoffs 70 oder höher ist.

3. Elektrolytkondensator nach Anspruch 1, wobei das flüssige aushärtende Harz ein additionsvernetzendes Silikon, ein kondensationsvernetzendes Silikon, ein additionsvernetzendes modifiziertes Silikon oder ein kondensationsvernetzendes modifiziertes Silikon ist.

4. Elektrolytkondensator nach Anspruch 1, wobei der flockige Füllstoff ein natürlicher Glimmer wie Bronzeglimmer, weißer Glimmer und Sericit, ein synthetischer Glimmer wie Fluorbronzeglimmer, Kaliumtetrasilikon-Glimmer, Natriumtetrasilikon-Glimmer, Natriumtaeniolit und Lithiumtaeniolit, ein natürlicher Smektit wie Montmorillonit und ein synthetischer Smektit wie Natriumhektorit, Lithiumhektorit und Saponit ist.

5. Elektrolytkondensator nach Anspruch 1, wobei der flockige Füllstoff durch eine Behandlung hydrophobisiert wird.

## Revendications

1. Condensateur électrolytique comprenant une borne conductrice (3) incluant : un fil en aluminium (4) qui se connecte à une feuille d'anode ou de cathode, une partie de connexion (5) formée à l'extrémité du fil en aluminium (4), et un fil conducteur (6) qui se connecte à la partie de connexion (5),
dans lequel une résine de durcissement liquide contenant une charge lamellaire à 1 % en poids ou plus et 50 % en poids ou moins est appliquée sur ou chargée dans la surface de la partie de connexion (5) de la borne conductrice (3) pour former une couche de résine durcie (7).

2. Condensateur électrolytique selon la revendication 1, dans lequel le rapport d'aspect moyen de la charge lamellaire est de 70 ou plus.

3. Condensateur électrolytique selon la revendication 1, dans lequel la résine de durcissement liquide est une silicone de durcissement par addition, une silicone de durcissement par condensation, une silicone modifiée de durcissement par addition, ou une silicone modifiée de durcissement par condensation.

4. Condensateur électrolytique selon la revendication 1, dans lequel la charge lamellaire est un mica naturel tel qu'un mica bronze, un mica blanc, ou une séricite, un mica synthétique tel qu'un mica bronze fluoré, un mica de tétrasilicone potassique, un mica de tétrasilicone sodique, une taéniolite de sodium, et une taéniolite de lithium, une smectite naturelle telle que la montmorillonite, et une smectite synthétique telle qu'une hectorite de sodium, une hectorite de lithium, et une saponite.

5. Condensateur électrolytique selon la revendication 1, dans lequel la charge lamellaire est rendue hydrophobe par un traitement.
